Europäisches Patentamt

European Patent Office

Office européen des brevets

(19)

(11) **EP 0 872 119 B1**

(12) **EUROPÄISCHE PATENTSCHRIFT**

(45) Veröffentlichungstag und Bekanntmachung des Hinweises auf die Patenterteilung:
**26.05.1999   Patentblatt 1999/21**

(21) Anmeldenummer: **96946144.1**

(22) Anmeldetag: **11.12.1996**

(51) Int Cl.⁶: **H04N 1/64**

(86) Internationale Anmeldenummer:
**PCT/DE96/02384**

(87) Internationale Veröffentlichungsnummer:
**WO 97/25811 (17.07.1997 Gazette 1997/31)**

(54) **BILDSIGNALVERARBEITUNGSEINRICHTUNG UND VERFAHREN ZUR VERARBEITUNG DIGITALER DATENSIGNALE**

IMAGE SIGNAL PROCESSING DEVICE AND PROCESS FOR THE PROCESSING OF DIGITAL DATA SIGNALS

DISPOSITIF DE TRAITEMENT DE SIGNAUX IMAGE ET PROCEDE DE TRAITEMENT DE SIGNAUX DE DONNEES NUMERIQUES

(84) Benannte Vertragsstaaten:
**DE FR GB IT**

(30) Priorität: **04.01.1996   DE 19600195**

(43) Veröffentlichungstag der Anmeldung:
**21.10.1998   Patentblatt 1998/43**

(73) Patentinhaber: **SIEMENS AKTIENGESELLSCHAFT
80333 München (DE)**

(72) Erfinder: **MAYER, Albrecht
D-81377 München (DE)**

(56) Entgegenhaltungen:
**EP-A- 0 660 583          EP-A- 0 673 156
GB-A- 2 117 208          GB-A- 2 275 386
US-A- 4 488 182**

**Beschreibung**

Die Erfindung bezieht sich auf eine Bildsignalverarbeitungseinrichtung und ein Verfahren zur Verarbeitung digitaler Datensignale und Ausgabe eines digitalen Bildsignales an eine mit der Bildsignalverarbeitungseinrichtung gekoppelte und eine entsprechend der ausgegebenen digitalen Bildsignale erzeugende Abbildung herstellende Bildanzeigeeinrichtung.

Bei der digitalen Verarbeitung von Bildern, d. h. zweidimensionalen Abbildungen von natürlichen oder künstlich erzeugten Objekten mit Farben oder Grauwerten, werden in Abhängigkeit der gewünschten Bildauflösung und/oder der gewünschten Farb- bzw. Grauwertauflösung unterschiedliche Datenformate der Bilddaten verwendet. Für die Ausgabe eines Bildes auf einem mit einem Rechner verbundenen Bildschirm wird in der Regel eine sogenannte RGB-Darstellung mit den Primärfarben Rot, Grün und Blau verwendet. Zur Ansteuerung des Bildschirmes sind hierbei mit dem Rechner gekoppelte Grafikkarten bekannt, vermittels derer die RGB-Bilddaten zur Darstellung des Bildes auf dem Bildschirm erzeugt werden. In der Grafikkarte ist zur Zwischenspeicherung der Bilddaten ein dynamischer Halbleiterspeicher vom wahlfreien Zugriffstyp, ein sogenannter Frame-Buffer vorgesehen, der bei einer üblichen Bildschirmauflösung von 1024 . 768 Pixel einen typischen Speicherumfang von etwa 1,5 Megabyte aufweist. Für die farbige Darstellung von Bildern auf dem Bildschirm wird eine Auflösung von 16 Bit pro Pixel im RGB-Format als ausreichend angesehen.

Daneben hat sich bei der Darstellung von digitalen Bildern insbesondere im Videobereich für die Verarbeitung, Übertragung und Speicherung von Bilddaten eine Darstellung mit Luminanz- und Chrominanz-Komponenten, insbesondere bei höheren Anforderungen an die Farb- und Grauwertauflösung des darzustellenden Bildes als vorteilhafter herausgestellt. Bei dieser Art der Darstellung, welche auch als YUV-Darstellung bezeichnet wird, wird der Farbwert mit einer Luminanzkomponente Y (Helligkeit) und zwei Chrominanzkomponenten U und V (Farbe) dargestellt. Diese Darstellung berücksichtigt, daß das menschliche Auge eine sehr viel bessere örtliche Auflösung für die Luminanz besitzt (Stäbchen in der Netzhaut) als für die Farbe. Bei vielen Kompressionsverfahren wird diese Eigenschaft durch eine geringere örtliche Auflösung der Chrominanzkomponenten direkt ausgenutzt. Die Luminanzkomponente besitzt die größte Informationsdichte, was zu einer insgesamt besseren Komprimierbarkeit führt. Insbesondere bei der digitalen Darstellung von Bildern im Fernsehbereich hat sich das YUV-Modell bewährt. Neben verschiedenen anderen Luminanz-Chrominanz-Darstellungen existieren darüber hinaus noch beispielsweise das HSV-Modell (Hue, Saturation, Value) mit den Komponenten Farbe, Sättigung und Helligkeitswert, sowie ein sogenanntes HLS-Modell (Hue, Lightness, Saturation) mit den Komponenten Farbe, Helligkeit und Sättigung. Diese weiteren Modelle sind in besonderem Maße auf die Fähigkeiten des menschlichen Auges abgestimmt.

Das breite Anwendungsspektrum der Farbdarstellung und die sehr unterschiedlichen Anforderungen haben dazu geführt, daß keines der Farbmodelle als universeller Standard akzeptiert worden ist, obwohl sich im Bereich der digitalen Bildkompression die Darstellungsform mit Luminanz- und Chrominanz-Komponenten durchgesetzt hat.

Insbesondere im Bereich von Personalcomputern zur Multimediaanwendung ist es wünschenswert und erforderlich, auf dem Bildschirm oder anderen Bildanzeigeeinrichtungen wie insbesondere Drucker oder Plotter Bilddaten in unterschiedlichen Datenformaten darstellen zu können. Hierzu ist es zunächst erforderlich, die Bilddaten mit unterschiedlichen Datenformaten in einem einzigen Bildspeicher (Frame-Buffer) pixelweise abspeichern, und nachfolgend in einer dem Bildspeicher zugeordneten Verarbeitungsschaltung zu verarbeiten. Bei einem bisherigen Verfahren wurden die Bilddaten vor der Abspeicherung in den Bildspeicher in ein gemeinsames, der darstellenden Bildanzeigeeinrichtung entsprechendes Format gebracht, was zur Folge hatte, daß entweder die Qualität des darzustellenden Bildes verringert wurde oder unnötig viel Speicherplatz benötigt wurde. Für die Darstellung einer zwei- oder dreidimensionalen Graphik wird eine Auflösung von 16 Bit pro Pixel in der RGB-Darstellung als ausreichend angesehen. Dagegen führt diese Farbquantisierung für in diesen Farbraum transformierten Bild-/Videosignale wegen der geringen Auflösung zu unakzeptablen Ergebnissen. Die Qualitätsanforderungen lassen sich im Prinzip zwar lösen, wenn der RGB-Farbraum mit einer höheren Auflösung, beispielsweise mit 24 Bit pro Pixel dargestellt wird; dies hätte jedoch eine Vergrößerung des Speicherplatzbedarfs um etwa 50 % im Bildspeicher zur Folge, obwohl ein digitales Videosignal in seiner eigenen Darstellung beispielsweise im 4:2:2-YUV-Format an sich nur 16 Bit pro Pixel benötigen würde.

Aus der GB-A-2117208 ist eine Vorrichtung und ein Verfahren zum Aufzeichnen eines zusammengesetzten Bilddokumentes auf fotosensitivem Material aus einem ursprünglichen Bild- und einem Buchstabendokument, welche synchron abgetastet wurden, bekannt. Hierbei werden die ursprünglichen Bild- und Buchstabensignale in Datenformate mit der gleichen Wortlänge konvertiert und in einem Zwischenspeicher abgespeichert. Die Datenformate sind zur Unterscheidung der Buchstabensignale von den Bildsignalen mit einem Unterscheidungsbit versehen. In Abhängigkeit des Unterscheidungsbits werden entweder die Bildsignale oder die Buchstabensignale aus dem Zwischenspeicher ausgelesen und der weiteren Verarbeitung zugeführt. Der Zweck des Verfahrens besteht unter anderem darin, bei der gemeinsamen Ausgabe von Bild- und Buchstabendaten eine Editierung der Buchstabendaten vornehmen zu können. Eine Verarbeitung von Bildsignalen mit unterschiedlichen Bilddatentypen ist mit der bekannten Vorrichtung nicht möglich.

Die EP-A-0673156 zeigt eine Vorrichtung, mit der die Ansteuerung unterschiedlicher Farbausgabeeinheiten wie beispielsweise Farbdrucker, Farbscanner und dergleichen gelingt.

Der Erfindung liegt die Aufgabe zugrunde, eine Bildsignalverarbeitungseinrichtung und ein Verfahren zur Verarbeitung digitaler Datensignale zur Verfügung zu stellen, welche bzw. welches die Verarbeitung und Anzeige digitaler Bilddatensignale auf einer Bildanzeigeeinrichtung auf der Grundlage wenigstens zweier unterschiedlicher vorbestimmter Datenformate ohne Erhöhung des Speicherplatzbedarfes des Bildspeichers, und gleichzeitig bei einer allenfalls geringfügig verringerten Anforderung an die gewünschte Farb- bzw. Grauwertauflösung ermöglicht.

Diese Aufgabe wird durch eine Bildsignalverarbeitungseinrichtung gemäß Anspruch 1 und ein Verfahren zur Verarbeitung digitaler Datensignale gemäß Anspruch 11 gelöst.

Die erfindungsgemäße Bildsignalverarbeitungseinrichtung besitzt eine Eingabeschaltung, an der die ersten und zweiten digitalen Datensignale mit den beiden unterschiedlichen, vorbestimmten Datenformaten anliegen, eine der Eingabeschaltung zugeordnete Verarbeitungsschaltung, in der die ersten und zweiten digitalen Datensignale mit einem den Typ des zugeordneten Datenformates kennzeichnenden Formatwert versehen bzw. verändert werden, einen mit der Verarbeitungsschaltung gekoppelten Bildspeicher, in dem die mit dem Formatwert versehenen bzw. veränderten ersten und zweiten digitalen Datensignale wenigstens zeitweise abgespeichert sind, eine dem Bildspeicher zugeordnete Koordinierungsschaltung, in welche die wenigstens zeitweise abgespeicherten, mit dem Formatwert versehenen bzw. veränderten ersten und zweiten digitalen Datensignale unterschiedlicher Datenformate aus dem Bildspeicher zeitlich nacheinander eingelesen werden, und welche in Abhängigkeit des den Typ des zugeordneten Datenformates der digitalen Datensignale kennzeichnenden Formatwertes eine Umformung wenigstens eines Datenformates der ersten und/oder zweiten digitalen Datensignale in ein Bildformat vornimmt, und eine der Koordinierungsschaltung nachgeschaltete Ausgabeschaltung, welche auf der Grundlage des Bildformates das abgeleitete Bildsignal erzeugt und an die Bildanzeigeeinrichtung ausgibt.

Das erfindungsgemäße Verfahren weist die Schritte auf: Anlegen der ersten und zweiten digitalen Datensignale mit den unterschiedlichen Datenformaten an eine Eingabeschaltung, Versehen bzw. Verändern der ersten und zweiten digitalen Datensignale mit einem den Typ des zugeordneten Datenformates kennzeichnenden Formatwert in einer der Eingabeschaltung zugeordneten Verarbeitungsschaltung, wenigstens zeitweises Abspeichern der mit dem Formatwert versehenen bzw. veränderten digitalen Datensignale in einen mit der Verarbeitungsschaltung gekoppelten Bildspeicher, Einlesen der wenigstens zeitweise abgespeicherten, mit dem Formatwert versehenen bzw. veränderten digitalen Datensignale unterschiedlicher Datenformate zeitlich nacheinander in eine dem Bildspeicher zugeordnete Koordinierungsschaltung, und Umformen des Datenformates der eingelesenen digitalen Datensignale in ein Bildformat in Abhängigkeit des den Typ des zugeordneten Datenformates der digitalen Datensignale kennzeichnenden Formatwertes, und Erzeugen des abgeleiteten Bildsignales auf der Grundlage des Bildformates und Ausgeben des Bildsignales an die Bildanzeigeeinrichtung über eine der Koordinierungsschaltung nachgeschaltete Ausgabeschaltung.

Der Erfindung liegt die Erkenntnis zugrunde, die als erste und zweite digitale Datensignale mit unterschiedlichen Datenformaten bezeichneten Bilddaten in ihren unterschiedlichen Darstellungsformen, d.h. hinsichtlich der örtlichen Anordnung des Farbraumes, Auflösung der Farbraumkomponenten und dergleichen, im Bildspeicher mit einem dem Typ des zugeordneten Datenformates kennzeichnenden Formatwert versehen bzw. allenfalls geringfügig verändert im Bildspeicher abzulegen, insbesondere pixel- oder pixelgruppenweise, und die Farbraumtransformation in das von der Bildanzeigeeinrichtung verstandene bzw. verarbeitbare Bildformat erst beim Auslesen in die darzustellende Bildanzeigeeinrichtung vorzunehmen. Die Unterscheidbarkeit der verschiedenen Datenformate der ersten und zweiten digitalen Datensignale im Bildspeicher erfolgt durch einen den Typ des zugeordneten Datenformates kennzeichnenden Formatwert. Durch diese Lösung können nicht nur die Anforderungen an die Größe des Bildspeichers um etwa 1/3 verringert werden, sondern zusätzlich können auch die Bandbreiteanforderungen an den Bildspeicher um etwa ebenfalls 1/3 reduziert werden. Letzteres ist deswegen wichtig, da bei nahezu sämtlichen derzeit verwendeten Graphikkarten als Hauptanwendung der erfindungsgemäßen Bildsignalverarbeitungseinrichtung die effektive Graphikleistung im wesentlichen durch die Speicherbandbreite bestimmt wird.

Die erfindungsgemäße Lösung unterscheidet sich von den bisher bekannten Realisierungen im wesentlichen dadurch, daß die Bildsignale nicht wie bisher üblich in ihrer auszugebenden Darstellung, sondern in deren im wesentlichen unveränderten Originaldarstellung, versehen bzw. geändert lediglich durch einen den Typ des zugeordneten Datenformates kennzeichnenden Formatwert, im Bildspeicher zwischengespeichert werden, was in den meisten Fällen zugleich die speicherplatzeffizienteste Möglichkeit darstellt. Die erfindungsgemäße Lösung ermöglicht somit bei einer nur geringfügig verringerten Auflösung der Darstellung eines farbigen Bildes eine Verarbeitung von Bildsignalen unterschiedlicher Formate bzw. Farbraumdarstellungen unter Verwendung eines einzigen Bildspeichers mit einem gegenüber den vorbekannten Realisierungen wesentlich verringertem Speicherplatzbedarf.

In Weiterführung der erfindungsgemäßen Bildsignalverarbeitungseinrichtung bzw. des erfindungsgemäßen Verfahrens kann vorgesehen sein, daß die Koordinierungsschaltung eine dem Bildspeicher zugeordnete Erkennungs- und Zuweisungsschaltung aufweist, in welcher die mit dem Formatwert versehenen bzw. veränderten digitalen ersten Datensignale anhand des Formatwerts identifiziert und einer Konvertierungsschaltung zugeführt werden, in der die ersten digitalen Datensignale in das Bildformat konvertiert werden. Weiterhin kann vorgesehen sein, daß die dem Bildspeicher zugeordnete Erkennungs- und Zuweisungsschaltung die mit dem Formatwert versehenen bzw. veränderten zweiten digitalen Datensignale anhand des Formatwerts identifiziert und einer Synchronisationsschaltung zugeführt werden, in der die zweiten digitalen Datensignale mit einem Ausgabetaktsignal synchronisiert werden.

Dem Prinzip der Erfindung folgend kann vorgesehen sein, daß die digitalen Datensignale aufeinanderfolgende Bitsignale mit einer vorbestimmten festen Wortlänge darstellen, und der den Typ des zugeordneten Datenformates kennzeichnende Formatwert wenigstens ein einzelnes Bitsignal an einer vorbestimmten Stelle jedes Wortes der digitalen Datensignale aufweist.

Insbesondere kann vorgesehen sein, daß die digitalen Datensignale in zwei unterschiedlichen Datenformaten mit unterschiedlichen Farbkodierungen, jedoch gleicher Wortlänge der Datenbits vorliegen, und der den Formattyp bzw. Farbkodierungstyp kennzeichnende Formatwert einen von zwei binären Zustandswerten des Formatbitwerts darstellt. Damit können die den Bilddaten zugeordneten digitalen Datensignale mit ihren unterschiedlichen Darstellungsformen im Bildspeicher pixel- oder pixelgruppenweise abgelegt werden, wobei die Unterscheidung zwischen den unterschiedlichen Darstellungsformen der Pixel bzw. Pixelgruppen durch eine oder mehrere zusätzliche Bitebenen im Bildspeicher erfolgen kann. Diese Bitebenen im Bildspeicher können insbesondere durch eine geringfügige Verringerung der Farbauflösung einer Farbkomponente der Bildsignlae erzeugt werden.

Bei einer konkreten Ausführung der Erfindung kann vorgesehen sein, daß jedes digitale Datensignal eine Wortlänge von 16 Bit pro auszugebendem Bildpixel aufweist, und wenigstens ein Bit des digitalen Datensignales durch den den Typ des zugeordneten Datenformates kennzeichnenden Formatwert ersetzt ist. In diesem Fall genügt zur Abspeicherung der digitalen Datensignale der Bilddaten mit den unterschiedlichen Darstellungsformen ein 16 Bit tiefer Bildspeicher.

Bei einer besonders bevorzugten Anwendung der Erfindung stellt das Datenformat der ersten digitalen Datensignale ein RGB-Graphikformat, und das Datenformat der zweiten digitalen Datensignale ein Videoformat bzw. Videopixelformat (YUV) dar. Bei einer Wortlänge von 16 Bit pro Pixel für beide Datenformate kann eine üblicherweise ausreichende Auflösung der Bildanzeigeeinrichtung von 1024 • 768 Pixel erzielt werden. Hierfür wird ein Bildspeicher mit einer Größe von etwa 1,5 Mbyte benötigt. Wird zur Unterscheidung des Formates von Graphik-(RGB)- und Videopixel- (YUV)-Datensignale ein einziges Bit verwendet, stehen noch 15 Bit für die Farbkodierung zur Verfügung. Damit kann mit 15 Bit pro Pixel für eine darzustellende Graphik das sogenannte 5:5:5-High-Colour-Format mit jeweils 5 Bit Auflösung pro RGB-Farbkomponente verwendet werden, so daß sich $2^{15}$=32768 unterschiedliche Farben darstellen lassen. Für Videopixel-(YUV)-Datensignale werden in zwei aufeinanderfolgenden 16 Bit Worten zwei benachbarte Pixel kodiert, wobei im ersten Wort die beiden Luminanzwerte abgelegt und im zweiten die für beide Pixel gemeinsamen zwei Chrominanzwerte abgelegt werden. Durch das Bit zur Unterscheidung der Farbräume (RGB oder YUV) wird die Quantisierung eines Luminanzwertes und eines Chrominanzwertes auf eine Auflösung von 7 Bit geringfügig verringert.

Eine vorzugsweise Anwendung der Erfindung bezieht sich auf Graphikkarten für handelsübliche Personalcomputer, insbesondere im Bereich Multimedia-Anwendungen, bei denen die gleichzeitige Darstellung von Graphik- und Videosignalen gefordert wird. Mit der Erfindung gelingt es, sowohl von einem Rechner erzeugte Graphiken, als auch Video-Bilder in einer akzeptablen Qualität darzustellen. Insbesondere können beide Graphikformate gleichzeitig dargestellt werden, beispielsweise ein Video-Bild innerhalb eines Fensters einer Benutzeroberfläche, welche auf einem handelsüblichen Bildschirm dargestellt wird.

Weitere Merkmale, Vorteile und Zweckmäßigkeiten der Erfindung ergeben sich aus der nachfolgenden Beschreibung eines Ausführungsbeispieles anhand der Figuren. Es zeigt:

Figur 1    eine schematische Darstellung einer erfindungsgemäßen Bildsignalverarbeitungseinrichtung gemäß einem Ausführungsbeispiel der Erfindung; und

Figur 2    eine schematische Darstellung der bei dem Ausführungsbeispiel verwendeten Bilddatenformate mit einem den Typ des zugeordneten Datenformates kennzeichnenden Formatwert.

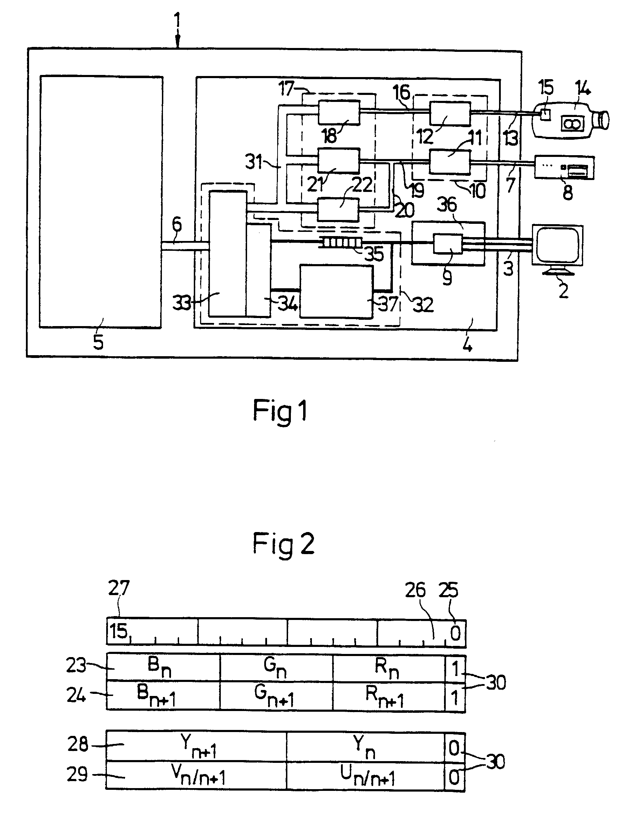

Figur 1 zeigt ein Ausführungsbeispiel einer erfindungsgemäßen Bildsignalverarbeitungseinrichtung in Form einer Graphikkarte 1, die zur Ansteuerung eines Bildschirms 2 oder anderen Bildanzeigeeinrichtung, wie insbesondere Drucker, Plotter oder dergleichen erforderlichen Bildsignale 3 liefert. Neben weiteren Schaltungskomponenten, die zur Erläuterung der Merkmale der Erfindung nicht erforderlich sind und daher der besseren Übersichtlichkeit wegen in Figur 1 nicht dargestellt sind, besitzt die Graphikkarte 1 einen auf einem Halbleiterchip integriert ausgebildeten Graphikschaltkreis 4 (Graphik-IC) und einen damit elektrisch gekoppelten Bildspeicher 5 (Frame-Buffer) in der Form eines dynamischen Halbleiterspeichers mit wahlfreiem Zugriff (DRAM) mit einer Frame-Buffer-Größe von 1,5 Megabyte und einer Speichertiefe von 16 Bit pro Pixel. Bildspeicher 5 und Graphikschaltkreis 4 sind über einen 64 Bit breiten Bus 6 für den gegenseitigen Datenaustausch verbunden.

Die Graphikkarte 1 liefert die für den Aufbau der Bildinformation auf dem Bildschirm 2 erforderlichen analogen RGB-Bildsignale 3 und fungiert hierzu als Schnittstelle zwischen dem Bussystem 7 eines Personalcomputers 8, und ist beispielsweise als Erweiterungsplatine, die in einem der Erweiterungssteckplätze auf der Hauptplatine des Personalcomputers 8 steckt, ausgebildet. Die über das Bussystem 7 der Graphikkarte 1 zugeführte, verarbeitete bzw. zwischengespeicherte Information gibt sie an den Bildschirm 2 als Bildsignal weiter. Ermöglicht wird die analoge Signalübertragung des Bildsignales 3 beispielsweise durch einen auf der Graphikkarte 1 vorgesehenen Digital-Analog-Converter 9, der intern aus drei Digital-Analog-Wandlern besteht, wobei je einer für die Farben Rot (R), Grün (G) und Blau (B) zugeordnet ist. Jeder Digital-Analog-Wandler verfügt über einen 8 Bit breiten Eingang und kann auf diese Weise $2^8$, also 256 Zustände erzeugen. Die drei integrierten Digital-Analog-Wandler erzeugen so für jede Grundfarbe jeweils 256 Abstufungen. Dies bedeutet, 256 mögliche Rottöne können mit 256 möglichen Grüntönen und 256 möglichen Blautönen zu Mischfarben kombiniert werden, so daß sich ein Farbspektrum von $256^3$, also 16 M verschiedenen Farben ergibt. Für die Ansteuerung des Bildschirms 2 steht für jede Grundfarbe eine Leitung zur Verfügung, deren Signalstärke für die Nuance des jeweiligen Farbtons zuständig ist. Ein maximaler Signalpegel auf allen drei Farbleitungen leuchtet den Bildpunkt absolut hell, also weiß aus, ein minimaler Pegel erzeugt Schwarz, also Nichts oder Dunkel.

Die Graphikkarte 1 besitzt eine Eingabeschaltung 10 mit einer PCI-schnittstellenschaltung 11 und einer Videoschnittstellenschaltung 12. Die PCI-Schnittstellenschaltung 11 kommuniziert über das Bussystem 7, welches ein PCI-Bussystem mit einer Daten- und Adressbusbreite von 32 Bit darstellt, mit dem Personalcomputer 8 und empfängt digitale Datensignale im Graphik-(RGB)-Format mit einer Wortlänge von 16 Bit pro Pixel, d.h. es ist eine Farbtiefe von 65536 Farben pro Pixel vorgesehen. Der Videoschnittstellenschaltung 12 der Eingabeschaltung 10 werden über eine 16 Bit breite Signalleitung 13 digitale Datensignale im Videopixelformat von einer in einer Videokamera 14 untergebrachten Videodekodersignalschaltung 15 zugeführt. Anstelle der Videokamera 14 mit Videodekodersignalschaltung 15 kann an die Videoschnittstellenschaltung 12 auch ein Videorekorder oder dergleichen mit einer geeigneten TV-Tuner/Digitiser-Schaltung angeschlossen sein, die digitale Datensignale im Videopixelformat liefert. Über eine Leitung 16 werden die digitalen Datensignale im Videopixelformat einer in einer schematisch durch strichlierte Linien angedeuteten Verarbeitungsschaltung 17 vorgesehenen Videoskalierungsschaltung 18 zugeführt. In dieser Schaltung wird das digitale Datensignal mit dem Videopixelformat mit einem dem Typ des zugeordneten Datenformates kennzeichnenden Formatwert versehen bzw. verändert. Die von der PCI-Schnittstellenschaltung 11 der Eingabeschaltung 10 gelieferten digitalen Datensignale mit dem Graphik-(RGB)-Format werden über Leitungen 19 und 20 einer ebenfalls in der Verarbeitungsschaltung 17 vorgesehenen VGA-Controller-Schaltung 21 bzw.einer Zeichengenerierungsschaltung 22 zugeführt. In diesen Schaltungen werden die digitalen Datensignale mit dem Graphik-(RGB)-Format ebenfalls mit einem den Typ des zugeordneten Datenformates entsprechend kennzeichnenden Formatwert versehen bzw. verändert.

Am Ausgang der Verarbeitungsschaltung 17 stehen somit erste und zweite digitale Datensignale mit einem Formatwert an, die anhand der schematischen Darstellung gemäß Figur 2 näher erläutert werden. Gezeigt ist das Datenformat für zwei unmittelbar aufeinanderfolgende Graphik-(RGB)-Pixel 23 und 24 mit einer Wortlänge von jeweils 16 Bit. Das erste Bit 25 jedes digitalen Datensignals 23, 24 ist mit einem Formatwert "1" versehen, und identifiziert damit das Graphik-(RGB)-Format. Die verbleibenden Bit, also die zweiten Bit 26 bis sechzehnten Bit 27 enthalten unverändert die Farbinformation der drei Farbkomponenten Rot, Grün und Blau. Für die Farbkodierung stehen somit 15 Bit zur Verfügung, so daß für eine Graphikdarstellung das sogenannte 5:5:5-High-Colour-Format mit jeweils 5 Bit Auflösung pro RGB-Farbkomponente verwendet werden kann. Damit lassen sich $2^{15} = 32768$ Farben darstellen. Für die digitalen Datensignale vom Videopixel-(YUV)-Format werden in zwei unmittelbar aufeinanderfolgenden 16 Bit Worten zwei benachbarte Pixel kodiert, d.h. es wird jeweils das erste Bit 25 der Datensignale 28 und 29 im Formatwert "0" als Kennzeichen des zugeordneten Datenformates eingeschrieben. Im ersten Wort des Datensignales 28 sind die beiden Luminanzwerte $Y_{n+1}$ und $Y_n$ abgelegt, und im zweiten die für beide Pixel gemeinsamen zwei Chrominanzwerte $V_n$, $V_{n+1}$ und $U_n$ und $U_{n+1}$. Durch das erste Bit 25 zur Unterscheidung der Farbräume (RGB oder YUV) wird die Quantisierung eines Luminanzwertes und eines Chrominanzwertes somit auf sieben Bit Auflösung verringert.

Die auf diese Weise mit einem Formatwert 30 versehenen bzw. veränderten digitalen Datensignale 23, 24, 28, 29 werden über eine Leitung 31 einer dem Bildspeicher 5 zugeordneten, in Figur 1 durch strichlierte Linien schematisch angedeuteten Koordinierungsschaltung 32 zugeführt, in welchem die mit dem Formatwert 30 versehenen bzw. veränderten ersten und zweiten digitalen Datensignale zeitweise abgespeichert werden. Der Bildspeicher 5 besitzt eine Speichergröße von 1,5 Megabyte und ist in 16 Bit pro Pixel organisiert. Vorzugsweise sind die physikalischen Bildwiederholspeicher innerhalb des Bildspeichers 5 in einer Größe von 16 Speicherebenen organisiert, wobei eine Speicherebene dem Formatwert 30 zur Unterscheidung der unterschiedlichen Darstellungsformen der im Bildspeicher pixel- oder pixelgruppenweise abgelegten Bilddaten zugeordnet sein kann. Diese Bitebene wird somit durch eine Verringerung der Farbauflösung einer Farbkomponente erzeugt, so daß man beispielsweise mit einem 16 Bit tiefen Bildspeicher auskommt. Mit dieser Lösung werden nicht nur die Anforderungen an die Größe des Bildspeichers um 1/3 verringert, sondern zusätzlich werden auch die Bandbreiteanforderungen an den Bildspeicher um 1/3 reduziert. Bei gleicher Anforderung an die Qualität der Darstellung mit einer herkömmlichen Graphikkarte müßte der RGB-Farbraum mit 24 Bit pro Pixel dargestellt werden, was eine Erhöhung des Speicherplatzbedarfs des Bildspeichers um etwa 50 % bedeuten würde.

Eine gemäß Figur 1 innerhalb der Koordinierungsschaltung 32 vorgesehene und der Speicherschnittstellenschaltung 33 nachgeschaltete Erkennungs- und Zuweisungsschaltung 34 identifiziert die aus dem Bildspeicher 5 zeitlich nacheinander ausgelesenen digitalen Datensignale 23, 24, 28, 29 anhand des jeweiligen Typ des zugeordneten Datenformates kennzeichnenden Formatwertes 30 und führt die Datensignale, sofern es sich um ein Datensignal mit einem Formatwert "1" handelt, einer Synchronisationsschaltung 35 bestehend aus einem Schieberegister zu, und, falls es sich um ein Datensignal mit dem Formatwert "0" handelt, einer Farbraumkonvertierungsschaltung 37 zu. Über das Schieberegister 35 wird das digitale Datensignal vom Graphit-(RGB)-Format unmittelbar an den Digital-Analog-Converter 9 zur Erzeugung des analogen Bildsignales 3 geführt. Im Falle eines digitalen Datensignals vom Videopixel-(YUV)-Format wird dieses vermittels der Farbraumkonvertierungsschaltung 37 umgeformt und daran anschließend der Ausgabeschaltung 36 d.h. dem Digital-Analog-Converter 9 zugeführt.

Die Umformung erfolgt hierbei beispielsweise entsprechend den nachstehenden Gleichungen:

$$G = Y - 0.698 \cdot V - 0.336 \cdot U$$

$$R = V + Y$$

$$B = U + Y$$

Bei dem dargestellten Ausführungsbeispiel besitzt die Eingabeschaltung 10 zwei physikalisch getrennte Eingänge, an denen die digitalen ersten 23, 24 und zweiten 28, 29 Datensignale anliegen, so daß eine eindeutige hardwaremäßige Trennung der Datensignale 23, 24, 28, 29 mit unterschiedlichen Datenformaten vorliegt. Darüber hinaus kann vorgesehen sein, was in Figur 1 aus Gründen der besseren Übersichtlichkeit nicht explicit dargestellt ist, daß die beiden digitalen Datensignale 23, 24, 28, 29 mit den unterschiedlichen Datenformaten an einem einzigen Eingang der Eingabeschaltung 10 anliegen. In diesem Fall kann die Unterscheidung der Datenformate der anliegenden digitalen Datensignale 23, 24, 28, 29 softwaremäßig durch eine der Eingabeschaltung 10 oder der Verarbeitungsschaltung 17 zugeordneten Steuerschaltung implementiert sein, die ebenfalls auf der Graphikkarte 1 integriert ausgebildet ist. Weiterhin kann bei der Schaltung nach Figur 1 vorgesehen sein, daß insbesondere der PCI-Schnittstellenschaltung 11 neben dem digitalen Datensignal vom RGB-Datenformat auch digitale Datensignale vom YUV-Format zugeführt werden, die über eine (in Figur 1 nicht näher dargestellte) Leitung der Videoskalierungsschaltung 18 zugeführt werden, wo sie mit einem den Typ des zugeordneten Datenformates kennzeichnenden Formatwert versehen bzw. verändert werden. Auch in diesem Fall ist eine der Verarbeitungsschaltung 17 bzw. Eingabeschaltung 10 zugeordnete Steuerschaltung erforderlich, welche eine softwaremäßige Unterscheidung der anliegenden digitalen Datensignale mit unterschiedlichen Datenformaten erkennt und die entsprechende Zuordnung des Formatwertes 30 in der Verarbeitungsschaltung 17 steuert. Wesentlich ist, daß der als Verarbeitungsschaltung 17 bezeichnete Schaltkreis eingangsseitig die anliegenden digitalen Datensignale 23, 24, 28, 29 unterschiedlicher Datenformate erkennt und einen entsprechenden Formatwert zuordnet, so daß ausgangsseitig an der Leitung 31 die entsprechend mit dem zugehörenden Typ des zugeordneten Datenformates kennzeichnenden Formatwert 30 versehenen bzw. veränderten Datensignale anliegen.

Bezugszeichenliste

| 1 | Graphikkarte |
|---|---|
| 2 | Bildschirm |
| 3 | RGB-Bildsignale |
| 4 | Graphikschaltkreis |
| 5 | Bildspeicher |
| 6 | Bus |
| 7 | Bussystem |
| 8 | Personalcomputer |
| 9 | Digital-Analog-Converter |
| 10 | Eingabeschaltung |
| 11 | PCI-Schnittstellenschaltung |
| 12 | Videoschnittstellenschaltung |
| 13 | Signalleitung |
| 14 | Videokamera |
| 15 | Videodekodersignalschaltung |
| 16 | Leitung |
| 17 | Verarbeitungsschaltung |
| 18 | Videoskalierungsschaltung |

| 19, 20 | Leitungen |
| 21 | VGA-Controller-Schaltung |
| 22 | Zeichengenerierungsschaltung |
| 23, 24 | digitale Datensignale |
| 25 | erstes Bit |
| 26 | zweites Bit |
| 27 | sechzehntes Bit |
| 28, 29 | digitale Datensignale |
| 30 | Formatwert |
| 31 | Leitung |
| 32 | Koordinierungsschaltung |
| 33 | Speicherschnittstellenschaltung |
| 34 | Erkennungs- und Zuweisungsschaltung |
| 35 | Synchronisationsschaltung |
| 36 | Ausgabeschaltung |
| 37 | Farbraumkonvertierungsschaltung |

**Patentansprüche**

1. Bildsignalverarbeitungseinrichtung zur Verarbeitung eines ersten digitalen Bilddatensignales (23, 24) mit einem vorbestimmten ersten Bilddatenformat und eines zweiten digitalen Bilddatensignales (28, 29) mit einem zweiten, von dem ersten Bilddatenformat unterschiedlichen, vorbestimmten Bilddatenformat, wobei das eine Bilddatenformat der ersten (23, 24) und zweiten (28, 29) digitalen Bilddatensignale ein RGB-Grafikformat, und das andere Bilddatenformat der zeitlich aufeinanderfolgenden digitalen Bilddatensignale (23, 24, 28, 29) ein Video-Format darstellt, und Ausgabe eines aus dem ersten und/oder zweiten digitalen Bilddatensignal abgeleiteten Bildsignales (3) an eine mit der Bildsignalverarbeitungseinrichtung gekoppelte und eine entsprechend der ausgegebenen Bildsignale (3) erzeugende Abbildung herstellende Bildanzeigeeinrichtung, welche Bildsignalverarbeitungseinrichtung aufweist:

   - eine Eingabeschaltung (10), an der die ersten (23, 24) und zweiten (28, 29) digitalen Bilddatensignale mit den beiden unterschiedlichen, vorbestimmten Bilddatenformaten anliegen,
   - eine der Eingabeschaltung zugeordnete Verarbeitungsschaltung (17), in der die ersten (23, 24) und zweiten (28, 29) digitalen Bilddatensignale mit einem den Typ des zugeordneten Bilddatenformates kennzeichnenden Formatwert (30) versehen bzw. verändert werden,
   - einen mit der Verarbeitungsschaltung (17) gekoppelten Bildspeicher (5), in dem die mit dem Formatwert (30) versehenen bzw. veränderten ersten (23, 24) und zweiten (28, 29) digitalen Bilddatensignale wenigstens zeitweise abgespeichert sind,
   - eine dem Bildspeicher (5) zugeordnete Koordinierungsschaltung (32), in welche die wenigstens zeitweise abgespeicherten, mit dem Formatwert (30) versehenen bzw. veränderten ersten (23, 24) und zweiten (28, 29) digitalen Bilddatensignale unterschiedlicher Bilddatenformate aus dem Bildspeicher (5) zeitlich nacheinander eingelesen werden, und welche in Abhängigkeit des den Typ des zugeordneten Bilddatenformates der digitalen Bilddatensignale (23, 24, 28, 29) kennzeichnenden Formatwertes (30) eine Umformung wenigstens eines Bilddatenformates der ersten (23, 24) und/oder zweiten (28, 29) digitalen Bilddatensignale in ein Bildformat vornimmt, und
   - eine der Koordinierungsschaltung (32) nachgeschaltete Ausgabeschaltung (9), welche auf der Grundlage des Bildformates das abgeleitete Bildsignal (3) erzeugt und an die Bildanzeigeeinrichtung ausgibt.

2. Bildsignalverarbeitungseinrichtung nach Anspruch 1, dadurch gekennzeichnet, daß die Koordinierungsschaltung (32) eine dem Bildspeicher (5) zugeordnete Erkennungs- und Zuweisungsschaltung (34) aufweist, in welcher die mit dem Formatwert (30) versehenen bzw. veränderten digitalen ersten Bilddatensignale (23, 24) anhand des Formatwerts (30) identifiziert und einer Konvertierungsschaltung (37) zugeführt werden, in der die ersten digitalen Bilddatensignale (23, 24) in das Bildformat konvertiert werden.

3. Bildsignalverarbeitungseinrichtung nach Anspruch 2, dadurch gekennzeichnet, daß die dem Bildspeicher (5) zugeordnete Erkennungs- und Zuweisungsschaltung (34) die mit dem Formatwert (30) versehenen bzw. veränderten zweiten digitalen Bilddatensignale (28, 29) anhand des Formatwerts (30) identifiziert und einer Synchronisationsschaltung (35) zugeführt werden, in der die zweiten digitalen Bilddatensignale (28, 29) mit einem Ausgabetaktsignal synchronisiert werden.

4. Bildsignalverarbeitungseinrichtung nach Anspruch 1 bis 3, dadurch gekennzeichnet, daß die digitalen Bilddatensignale (23, 24, 28, 29) aufeinanderfolgende Bitsignale mit einer vorbestimmten festen Wortlänge darstellen, und der den Typ des zugeordneten Datenformates kennzeichnende Formatwert (30) wenigstens ein einzelnes Bitsignal an einer vorbestimmten Stelle jedes Wortes der digitalen Bilddatensignale (23, 24, 28, 29) aufweist.

5. Bildsignalverarbeitungseinrichtung nach Anspruch 1 bis 4, dadurch gekennzeichnet, daß die zeitlich aufeinanderfolgenden digitalen Bilddatensignale (23, 24, 28, 29) in zwei unterschiedlichen Bilddatenformaten mit unterschiedlichen Farbkodierungen, jedoch gleicher Wortlänge der Datenbits vorliegen, und der den Formattyp bzw. Farbkodierungstyp kennzeichnende Formatwert einen von zwei binären Zustandswerten des Formatbitwerts darstellt.

6. Bildsignalverarbeitungseinrichtung nach Anspruch 4 oder 5, dadurch gekennzeichnet, daß jedes digitale Bilddatensignal (23, 24, 28, 29) eine Wortlänge von 16 Bit pro auszugebendem Bildpixel aufweist, und wenigstens ein Bit des digitalen Bilddatensignales (23, 24, 28, 29) durch den den Typ des zugeordneten Bilddatenformates kennzeichnenden Formatwert (30) ersetzt ist.

7. Bildsignalverarbeitungseinrichtung nach Anspruch 1 bis 6, dadurch gekennzeichnet, daß die Eingabeschaltung (10) eine Videoschnittstellenschaltung (12), an der die digitalen Bilddatensignale (23, 24, 28, 29) im Video-Format anliegen, und eine Busschnittstellenschaltung aufweist, an der die digitalen Bilddatensignale (23, 24, 28, 29) im RGB-Grafikformat anliegen.

8. Bildsignalverarbeitungseinrichtung nach Anspruch 1 bis 7, dadurch gekennzeichnet, daß die Ausgabeschaltung einen Digital-Analog-Converter (9) aufweist.

9. Bildsignalverarbeitungseinrichtung nach Anspruch 1 bis 8, dadurch gekennzeichnet, daß die Bildausgabeeinrichtung einen handelsüblichen Bildschirm mit einer Pixelauflösung von insbesondere 1024 • 768 aufweist.

10. Bildsignalverarbeitungseinrichtung nach Anspruch 1 bis 9, dadurch gekennzeichnet, daß die Bildsignalverarbeitungseinrichtung eine Grafikkarte (1) zur Verwendung in einem handelsüblichen Personalcomputer (8) darstellt.

11. Verfahren zur Verarbeitung eines ersten digitalen Bilddatensignales (23, 24) mit einem vorbestimmten ersten Bilddatenformat und eines zweiten digitalen Bilddatensignales (28, 29) mit einem zweiten, von dem ersten Bilddatenformat unterschiedlichen, vorbestimmten Bilddatenformat, wobei das eine Bilddatenformat der ersten (23, 24) und zweiten (28, 29) digitalen Bilddatensignale ein RGB-Grafikformat, und das andere Bilddatenformat der zeitlich aufeinanderfolgenden digitalen Bilddatensignale (23, 24, 28, 29) ein Video-Format darstellt, und Ausgabe eines aus dem ersten (23, 24) und/oder zweiten (28, 29) digitalen Bilddatensignal abgeleiteten Bildsignales an eine entsprechend der ausgegebenen Bildsignale erzeugende Abbildung herstellende Bildanzeigeeinrichtung, welches Verfahren die Schritte aufweist:

- Anlegen der ersten (23, 24) und zweiten (28, 29) digitalen Bilddatensignale mit den unterschiedlichen Bilddatenformaten an eine Eingabeschaltung (10),

- Versehen bzw. Verändern der ersten (23, 24) und zweiten (28, 29) digitalen Bilddatensignale mit einem den Typ des zugeordneten Bilddatenformates kennzeichnenden Formatwert (30) in einer der Eingabeschaltung (10) zugeordneten Verarbeitungsschaltung (17),

- wenigstens zeitweises Abspeichern der mit dem Formatwert (30) versehenen bzw. veränderten digitalen Bilddatensignale (23, 24, 28, 29) in einen mit der Verarbeitungsschaltung (17) gekoppelten Bildspeicher (5),

- Einlesen der wenigstens zeitweise abgespeicherten, mit dem Formatwert (30) versehenen bzw. veränderten digitalen Bilddatensignale (23, 24, 28, 29) unterschiedlicher Bilddatenformate zeitlich nacheinander in eine dem Bildspeicher (5) zugeordnete Koordinierungsschaltung (32), und Umformen des Bilddatenformates der eingelesenen digitalen Bilddatensignale (23, 24, 28, 29) in ein Bildformat in Abhängigkeit des den Typ des zugeordneten Bilddatenformates der digitalen Bilddatensignale (23, 24, 28, 29) kennzeichnenden Formatwertes (30), und

- Erzeugen des abgeleiteten Bildsignales auf der Grundlage des Bildformates und Ausgeben des Bildsignales an die Bildanzeigeeinrichtung über eine der Koordinierungsschaltung (32) nachgeschaltete Ausgabeschaltung (36).

**Claims**

1. Video signal processing device for processing a first digital video data signal (23, 24) having a predetermined first video data format and a second digital video data signal (28, 29) having a second predetermined video data format different from the first video data format, one video data format of the first (23, 24) and the second (28, 29) digital video data signals constituting and RGB graphics format and the other video data format of the chronologically successive digital video data signals (23, 24, 28, 29) constituting a video format, and outputting a video signal (3) derived from the first and/or second digital video data signal to a picture display device which is coupled to the video signal processing device and produces an image to be generated in accordance with the output video signals (3), which video signal processing device has:

- an input circuit (10), to which the first (23, 24) and second (28, 29) digital video data signals having the two different, predetermined video data formats are applied,

- a processing circuit (17), which is assigned to the input circuit and in which the first (23, 24) and second (28, 29) digital video data signals are provided, or changed, with a format value (30) which identifies the type of the assigned video data format,

- a frame buffer (5), which is coupled to the processing circuit (17) and in which the first (23, 24) and second (28, 29) digital video data signals which have been provided, or changed, with the format value (30) are stored at least at times,

- a coordination circuit (32) which is assigned to the frame buffer (5), to which the first (23, 24) and second (28, 29) digital video data signals which have different video data formats, have been provided, or changed, with the format value (30) and stored at least at times are read chronologically successively from the frame buffer (5) and which, as a function of the format value (30) which identifies the type of the assigned video data format of the digital video data signals (23, 24, 28, 29), carries out a conversion of at least one video data format of the first (23, 24) and/or second (28, 29) digital video data signals to a picture format, and

- an output circuit (9), which is connected downstream of the coordination circuit (32) and, on the basis of the picture format, generates the derived video signal (3) and outputs it to the picture display device.

2. Video signal processing device according to Claim 1, characterized in that the coordination circuit (32) has an identification and allocation circuit (34), which is assigned to the frame buffer (5) and in which the digital first video data signals (23, 24) which have been provided, or changed, with the format value (30) are identified using the format value (30) and fed to a conversion circuit (37) in which the first digital video data signals (23, 24) are converted into the picture format.

3. Video signal processing device according to Claim 2, characterized in that the identification and allocation circuit (34) which is assigned to the frame buffer (5) identifies the second digital video data signals (28, 29) which have been provided, or changed, with the format value (30) using the format value (30) and feeds them to a synchronization circuit (35) in which the second digital video data signals (28, 29) are synchronized with an output clock signal.

4. Video signal processing device according to Claims 1 to 3, characterized in that the digital video data signals (23, 24, 28, 29) constitute successive bit signals with a predetermined, fixed word length, and the format value (30) which identifies the type of the assigned data format has at least one individual bit signal at a predetermined location in each word of the digital video data signals (23, 24, 28, 29).

5. Video signal processing device according to Claims 1 to 4, characterized in that the chronologically successive digital video data signals (23, 24, 28, 29) exist in two different video data formats having different colour codings but the same word length of the data bits, and the format value which identifies the format type or colour coding type constitutes one or two binary state values of the format bit value.

6. Video signal processing device according to Claims 4 or 5, characterized in that each digital video data signal (23, 24, 28, 29) has a word length of 16 bits per video pixel to be output, and at least one bit of the digital video data signal (23, 24, 28, 29) is replaced by the format value (30) which identifies the type of the assigned video data format.

7. Video signal processing device according to Claims 1 to 6, characterized in that the input circuit (10) has a video interface circuit (12), to which the digital video data signals (23, 24, 28, 29) in the video format are applied, and a bus interface circuit, to which the digital video data signals (23, 24, 28, 29) in the RGB graphics format are applied.

8. Video signal processing device according to Claims 1 to 7, characterized in that the output circuit has a digital/analog converter (9).

9. Video signal processing device according to Claims 1 to 8, characterized in that the picture output device has a commercially available screen with a pixel resolution of, in particular, 1024 × 768.

10. Video signal processing device according to Claims 1 to 9, characterized in that the video signal processing device constitutes a graphics card (1) for use in a commercially available personal computer (8).

11. Method for processing a first digital video data signal (23, 24) having a predetermined first video data format and a second digital video data signal (28, 29) having a second predetermined video data format different from the first video data format, one video data format of the first (23, 24) and the second (28, 29) digital video data signals constituting and RGB graphics format and the other video data format of the chronologically successive digital video data signals (23, 24, 28, 29) constituting a video format, and outputting a video signal derived from the first (23, 24) and/or second (28, 29) digital video data signal to a picture display device which produces an image to be generated in accordance with the output video signals, which method has the steps:

- application of the first (23, 24) and second (28, 29) digital video data signals having the different video data formats to an input circuit (10),
- provision or changing of the first (23, 24) and second (28, 29) digital video data signals with a format value (30) which identifies the type of the assigned video data format, in a processing circuit (17) assigned to the input circuit (10),
- storage at least at times of the digital video data signals (23, 24, 28, 29) which have been provided, or changed, with the format value (30) in a frame buffer (5) coupled to the processing circuit (17),
- reading of the digital video data signals (23, 24, 28, 29) which have different video data formats, have been provided, or changed, with the format value (30) and stored at least at times chronologically successively into a coordination circuit (32) assigned to the frame buffer (5) and conversion of the video data format of the read-in digital video data signals (23, 24, 28, 29) into a picture format as a function of the format value (30) which identifies the type of the assigned video data format of the digital video data signals (23, 24, 28, 29), and
- generation of the derived video signal on the basis of the picture format and outputting of the video signal to the picture display device via an output circuit (36) connected downstream of the coordination circuit (32).

**Revendications**

1. Dispositif de traitement de signal d'image pour le traitement d'un premier signal de données d'image numérique (23, 24) ayant un premier format de données d'image prédéterminé et d'un deuxième signal de données d'image numérique (28, 29) ayant un deuxième format de données d'image prédéterminé, différent du premier format de données d'image, l'un des formats de données d'image des premiers (23, 24) et deuxièmes (28, 29) signaux de données d'image numériques représentant un format graphique RGB et l'autre format de données d'image des signaux de données d'image numériques (23, 24, 28, 29) successifs représentant un format vidéo, et pour la délivrance d'un signal d'image (3) déduit du premier et/ou du deuxième signal de données d'image à un dispositif d'affichage d'image qui est couplé au dispositif de traitement de signal d'image et qui élabore une image produite à partir des signaux d'image (3) délivrés, lequel dispositif de traitement de signal d'image comporte :

- un circuit d'entrée (10), qui reçoit les premiers (23, 24) et deuxièmes (28, 29) signaux de données d'image numériques ayant les deux formats de données prédéterminés différents,
- un circuit de traitement (17), qui est associé au circuit d'entrée et dans lequel les premiers (23, 24) et deuxièmes (28, 29) signaux de données d'image numériques sont modifiés c'est-à-dire munis d'une valeur de format (30) caractérisant le type du format de données associé,
- une mémoire d'image (5), qui est couplée au circuit de traitement (17) et dans laquelle sont mémorisés au moins temporairement les premiers (23, 24) et deuxièmes (28, 29) signaux de données d'image numériques modifiés c'est-à-dire munis de la valeur de format (30),
- un circuit de coordination (32), qui est associé à la mémoire d'image (5), dans lequel les premiers (23, 24) et deuxièmes (28, 29) signaux de données d'image numériques modifiés c'est-à-dire munis de la valeur de format (30) et mémorisés au moins temporairement et ayant des formats de données différents sont lus successivement dans la mémoire d'image (5) et qui effectue en fonction de la valeur de format (30) caractérisant le type du format de données associé des signaux de données d'image numériques (23, 24, 28, 29) une transformation d'au moins un format de données d'image des premiers (23, 24) et/ou deuxièmes (28, 29) signaux de données d'image numériques en un format d'image, et
- un circuit de sortie (9), qui est placé du côté aval du circuit de coordination (32) et qui produit sur la base du format d'image le signal d'image (3) déduit et l'envoie au dispositif d'affichage d'image.

2. Dispositif de traitement de signal d'image selon la revendication 1, caractérisé par le fait que le circuit de coordination (32) comporte un circuit de reconnaissance et d'attribution (34) qui est associé à la mémoire d'image (5) et dans lequel les premiers signaux de données d'image numériques (23, 24) modifiés c'est-à-dire munis de la valeur de format (30) sont identifiés à l'aide de la valeur de format (30) et sont envoyés à un circuit de conversion (37) dans lequel les premiers signaux de données d'image numériques (23, 24) sont convertis dans le format d'image.

3. Dispositif de traitement de signal d'image selon la revendication 2, caractérisé par le fait que le circuit de reconnaissance et d'attribution (34) associé à la mémoire d'image (5) identifie à l'aide de la valeur de format (30) les deuxièmes signaux de données d'image numériques (28, 29) modifiés c'est-à-dire munis de la valeur de format (30) et les envoie à un circuit de synchronisation (35) dans lequel les deuxièmes signaux de données d'image numériques (28, 29) sont synchronisés avec un signal de cadence de sortie.

4. Dispositif de traitement de signal d'image selon une revendication 1 à 3, caractérisé par le fait que les signaux de données d'image numériques (23, 24, 28, 29) représentent des signaux binaires successifs ayant une longueur de mot fixe prédéterminée et que la valeur de format (30) caractérisant le type du format de données associé comporte au moins un signal binaire individuel à une position prédéterminée de chaque mot des signaux de données d'image numériques (23, 24, 28, 29).

5. Dispositif de traitement de signal d'image selon une revendication 1 à 4, caractérisé par le fait que les signaux de données d'image numériques (23, 24, 28, 29) successifs sont présents dans deux formats de données d'image différents avec des codages de couleurs différents mais avec la même longueur de mot des bits de données et que la valeur de format caractérisant le type de format c'est-à-dire le type de codage de couleurs a une valeur parmi deux valeurs d'état binaires de la valeur binaire de format.

6. Dispositif de traitement de signal d'image selon la revendication 4 ou 5, caractérisé par le fait que chaque signal de données d'image numérique (23, 24, 28, 29) a une longueur de mot de 16 bits par pixel d'image à délivrer et qu'au moins un bit du signal de données numérique d'image (23, 24, 28, 29) est remplacé par la valeur de format (30) caractérisant le type du format de données d'image associé.

7. Dispositif de traitement de signal d'image selon une revendication 1 à 6, caractérisé par le fait que le circuit d'entrée (10) comporte un circuit d'interface vidéo (12) auquel sont appliqués les signaux de données d'image numériques (23, 24, 28, 29) au format vidéo et un circuit d'interface de bus auquel sont appliqués les signaux de données d'image numériques (23, 24, 28, 29) au format graphique RGB.

8. Dispositif de traitement de signal d'image selon une revendication 1 à 7, caractérisé par le fait que le circuit de sortie comporte un dispositif convertisseur numérique-analogique (9).

9. Dispositif de traitement de signal d'image selon une revendication 1 à 8, caractérisé par le fait que le dispositif de sortie d'image comporte un écran usuel ayant une résolution en pixels de 1 024 ∈ 768 en particulier.

10. Dispositif de traitement de signal d'image selon une revendication 1 à 9, caractérisé par le fait que le dispositif de traitement de signal d'image représente une carte graphique (1) en vue d'une utilisation dans un ordinateur personnel (8) usuel.

11. Procédé pour le traitement d'un premier signal de données d'image numérique (23, 24) ayant un premier format de données d'image prédéterminé et d'un deuxième signal de données d'image numérique (28, 29) ayant un deuxième format de données d'image prédéterminé, différent du premier format de données d'image, l'un des formats de données d'image des premiers (23, 24) et deuxièmes (28, 29) signaux de données d'image numériques représentant un format graphique RGB et l'autre format de données d'image des signaux de données d'image numériques (23, 24, 28, 29) successifs représentant un format vidéo, et pour la délivrance d'un signal d'image (3) déduit du premier (23, 24) et/ou du deuxième (28, 29) signal de données d'image à un dispositif d'affichage d'image qui élabore une image produite à partir des signaux d'image délivrés, lequel procédé comporte les étapes suivantes :

- on applique les premiers (23, 24) et deuxièmes (28, 29) signaux de données d'image numériques ayant les différents formats de données d'image à un circuit d'entrée (10),

- on modifie c'est-à-dire munit les premiers (23, 24) et deuxièmes (28, 29) signaux de données d'image numériques d'une valeur de format (30) caractérisant le type du format de données d'image associé dans un circuit de traitement (17) associé au circuit d'entrée (10),

- on mémorise au moins temporairement les signaux de données d'image numériques (23, 24, 28, 29) modifiés c'est-à-dire munis de la valeur de format (30) dans une mémoire d'image (5) couplée au circuit de traitement (17),

- on lit successivement les signaux de données d'image numériques (23, 24, 28, 29) modifiés c'est-à-dire munis de la valeur de format (30) et mémorisés au moins temporairement et ayant des formats de données d'image différents dans un circuit de coordination (32) associé à la mémoire d'image (5) et on transforme le format de données d'image des signaux de données d'image numériques lus (23, 24, 28, 29) en un format d'image en fonction de la valeur de format (30) caractérisant le type du format de données d'image associé des signaux de données d'image numériques (23, 24, 28, 29), et

- on produit le signal d'image déduit sur la base du format d'image et on délivre le signal d'image au dispositif d'affichage d'image par l'intermédiaire d'un circuit de sortie (36) placé du côté aval du circuit de coordination (32).

Fig 1

Fig 2